# EUROPEAN PATENT SPECIFICATION

(11) **EP 2 456 985 B1**
(45) Date of publication and mention of the grant of the patent: **13.11.2013**
(21) Application number: 10737534.7
(22) Date of filing: 20.07.2010
(51) Int. Cl.: F15B 13/043, F15B 19/00

(54) **CONTROL ARRANGEMENT**
STEUERANORDNUNG
AMÉNAGEMENT DE COMMANDE

(30) Priority: 20.07.2009 GB 0912550
(43) Date of publication of application: 30.05.2012
(73) Proprietor: Ultronics Limited, Gloucestershire GL52 6RT (GB)
(72) Inventor: FAGERLUND, Christian, S-504 96 Bredared (SE); TRESADERN, Jonathan, Swindon SN5 7DX (GB)
(74) Representative: Tabeling, Marcella M.J.
(86) International application number: PCT/EP2010/060503
(87) International publication number: WO 2011/009870

(56) References cited:
- WO-A1-2006/122339
- DE-A1-102006 049 491

## Description

This invention relates to a control arrangement, and in particular to a method of controlling the operation of a control valve of the type having, preferably, two or more movable or slidable elements (referred to hereafter as a twin spool control valve) to permit improved control over the operation of a device or vehicle, the operation of which is controlled using the control valve.

Hydraulic control systems as disclosed in WO 2006/12239 are in widespread use in controlling the operation of excavating equipment, hoists, lifting arms and a number of similar devices. The control systems used therein typically include control valves in the form of a spool slidable within a bore, the position of the spool determining which of a pair of outlet ports is connected to relatively high pressure fluid and which is connected to a low pressure at any given time.

More recently, twin spool control valves have been used. Such arrangements have several advantages over single spool arrangements as the positions occupied by the two spools can be controlled individually. However, the control schemes typically used to drive such control valves are very similar to those that have been used successfully in relation to the single spool arrangements.

It is an object of the invention to provide a control arrangement for such a control valve which permits enhanced performance of a device control using the control valve.

According to the present invention there is provided a control arrangement for use in a hydraulic control system in accordance with claim 1.

Improved control over the commencement of motion may be attained in circumstances in which the motion or load is not subject to external actions capable of supplying energy to the hydraulic system, such as the action of gravity or spring loadings. One example of such motion is slewing motion. In such an arrangement the parameter monitored may be related to the speed of slew motion. When the motion is slow, a first control scheme which incorporates a stability function to assist control in such circumstances may be used, a second control scheme not including such functionality being used when the slew motion exceeds a predetermined speed. Although speed is mentioned herein, other parameters could also be used.

Such an arrangement permits the avoidance or reduction of 'hunting', and in addition may allow operating efficiencies to be made.

It will be appreciated that further control schemes may be present, which control scheme is used being dependent upon the value of the operating parameter.

For example, the operating parameter which is monitored may be representative of the position of, or speed of movement of, for example, a hoist, the control system being operable to switch between the first control scheme and the second control scheme when the position of the hoist exceeds a predetermined position. The first control scheme may be arranged to achieve a relatively large change in position for a given movement of a control actuator, for example in the form of a joystick, the second scheme achieving a smaller change in position for the same movement of the control actuator. It will thus be appreciated that, once the hoist has moved beyond a predetermined position, a greater degree of control accuracy is attained.

In addition to permitting enhanced control, such a system is less susceptible to 'hunting' type problems, when the system pressure oscillates about a desired pressure, which, again, permits an improvement in control accuracy.

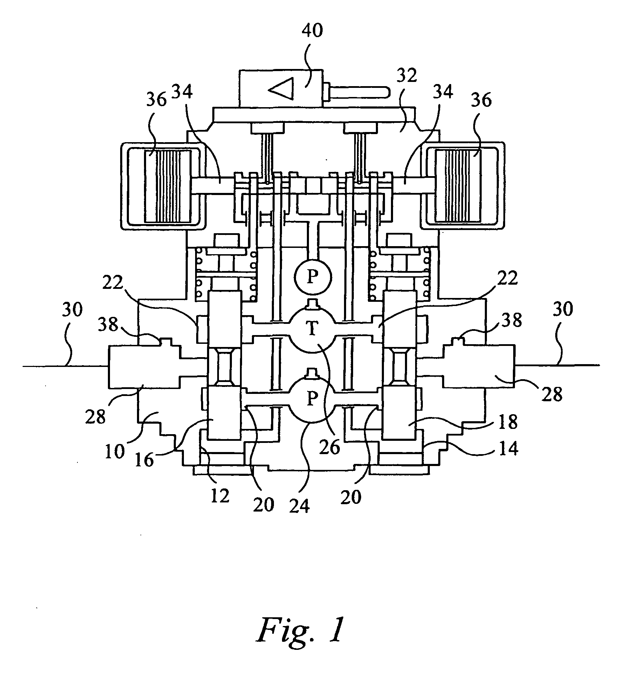

The invention will further be described, by way of example, with reference to the accompanying drawing, Figure 1, which is a diagrammatic view of a control system incorporating a twin spool control valve.

Referring to Figure 1 there is illustrated, diagrammatically, a twin spool control valve for use in controlling the operation of the control system of a piece of equipment, for example an excavator, crane, hoist, or the like, at least some functions of which are controlled hydraulically. The control valve comprises a main valve block 10 in which valve bores 12, 14 are formed. Each bore 12, 14 houses a respective spool 16, 18 (forming the twin spools of the control valve). Connected to the main valve block 10, in use, are supply and return pressure lines which are each connected to respective ports 20, 22 opening into the bores 12, 14 via supply and return pressure lines 24, 26. Each of the bores 12, 14 further includes or has associated therewith a control port 28, and it will be appreciated that the position of each spool 16, 18 within its associated bore 12, 14 determines whether each of the control ports 28 communicates with the associated supply port 20 or the associated return port 22. In Figure 1, if the left hand spool 16 occupied a raised position, the spool 16 would close the supply port 20, communication being permitted in a relatively unrestricted manner between the control port 28 and the return port 22. In contrast, if the right hand spool 18 occupied a lowered position, the return port 22 would be closed by the spool 18, communication being permitted between the supply port 20 and the control port 28.

If the main valve block 10 were mounted upon, say, a hoist, the pressures in the control lines 30 connected to the control ports 28 may be used in controlling the position of the lifting arm of the hoist. For example, the position of the spools 16, 18 mentioned above may result in raising of the arm due to fluid at supply pressure being supplied via the bore 14 to one end of a piston used in controlling the position of the arm, fluid from the opposite end of the piston being able to flow to return via the other bore 12. Downward movement of the spool 16 and upward movement of the spool 18 will switch the piston connections, resulting in the arm being lowered.

The positions occupied by the spools 16, 18 are controlled by a pilot valve block 32 which controls the volume, and hence pressure, of fluid applied to the opposite ends of the spools 16, 18. The pilot valve block 32 contains a pair of control spools 34, the positions of which are controlled electromagnetically by controlling the current applied to a winding carried by each control spool 34, interaction between the resulting magnetic field and the magnetic field of an associated permanent magnet 36 being used to drive each control spool 34 for movement to desired positions. A control unit 40 is operable to control the current applied to each winding, and hence to control the position occupied by each control spool 34.

Each control spool 34 includes a series of lands which control communication between ports connected to return pressure, an intermediate pilot pressure, and the chambers at each end of each of the spools 16, 18.

Starting from the position illustrated, if the left hand control spool 34 were moved to the left, return pressure would be applied to the upper end of the left hand spool 16, pilot pressure being applied to the lower end thereof with the result that the spool 16 occupies its raised position. If this control spool 34 were moved to the right in the orientation illustrated, then the lower end of the spool 16 would be exposed to return pressure whilst the upper end is exposed to pilot pressure, resulting in downward movement of the spool 16. Control over the position occupied by the right hand spool 18 is achieved in a similar manner. It will be appreciated that the positions occupied by the control spools 34 can be controlled independently. Consequently, the positions occupied by the spools 16, 18 can also be controlled independently of one another.

Each control line 30 has a pressure transducer 38 associated therewith to permit the feedback to the associated control unit 40 of signals representative of the pressures being applied to the piston, in use. Further, a position transducer conveniently monitors the position of each of the spools 16, 18, the output of the position transducers being supplied to the control unit 40 to permit closed loop control over the spools 16, 18.

In use, an operator uses a control actuator, for example in the form of a joystick, to supply control signals to the control unit 40 indicative of, for example, the required direction and speed of movement of the arm, or of another parameter to be controlled. For example, if he wishes to raise the arm he may pull on the joystick, pushing of the joystick indicating that the aim is to be lowered. Thus, if it is sensed that the operator has pulled on the joystick to indicate that the arm is to be raised, the control unit 40 applies currents to the windings to urge the control spools 34 toward the positions illustrated, such movement resulting in the spools 16, 18 moving toward the positions shown, applying regulated pressures to the piston in an orientation such that the arm is raised. If, instead, the joystick is pushed to indicate that the arm is to be lowered, the positions occupied by the control spools 34 are switched, driving the spools 16, 18 in their alternative directions and resulting in the arm being lowered.

In the description hereinbefore the extreme positions of the spools 16, 18 have been described, ie the spool positions in which the supply or return port 20, 22 of each bore 12, 14 is fully open. However, it will be appreciated that the spools 16, 18 will normally be driven to intermediate positions. Further, as the spools 16, 18 are independent of one another and the positions occupied thereby are controllable independently of one another, a range of operating schemes are possible. For example, if the operator moves the joystick by a relatively large angle, the corresponding extreme position of the spools 16, 18 may be achieved to result in a relatively high speed movement of the arm. If the joystick angle is smaller, then the control unit 40 may reduce the degree of opening of, for example, the corresponding return port 22 so as to result in movement of the arm being at a reduced speed.

In accordance with the invention, the manner in which the control unit 40 controls the positions of the spools 16, 18 is dependent upon another operating characteristic or parameter of the control system. In this arrangement, the position of the arm, for example, is monitored and used by the control unit 40 in controlling the operation and movement of the spools 16, 18. If the position of arm is such that the end of the arm is relatively close to the operator's position, then the control unit controls movement of the arm using a first control scheme as set out above. If the position of the arm is such that the remote end thereof is further than a predetermined distance away from the operator's position, then a second control scheme is used. The second control scheme is designed to provide a greater degree of control over the movement of the arm, and this may be achieved by ensuring that, even for a relatively large angular displacement of the joystick, only a relatively small degree of opening of the associated valve port 22 or 20 is achieved with the result that the arm moves relatively slowly.

Thus it will be appreciated, that, in use, starting from a position in which the remote end of the arm is reasonably close to the operator, the operator can use the joystick to achieve relatively rapid movement of the arm towards a desired remote position. However, as that position is reached, the control arrangement will automatically switch to a control mode in which the operator has a greater degree of control, thereby allowing the operator to control the arm position precisely.

The arm position could be sensed directly using a suitable position sensor. However, it may be preferred to sense arm position by sensing the pressure within the associated piston cylinder.

In addition to achieving an improved degree of control accuracy, the provision of such an arrangement has the advantage that the control scheme used is dependent upon or related to, for example, the magnitude of the load being lifted or moved, possibly in conjunction with the position of the arm. A second control scheme for use in such conditions has a number of other advantages. For example, where the arm is being used to lift relatively high loads from remote locations, as the load is lifted, it accelerates and the output of associated pump needs to be increased to maintain a sufficient pressure to accommodate this. When the required speed has been attained, the pump output can be lowered. However, the time lags between commanding the movement of the load and the pump output changing results in the system pressure tending to oscillate i.e. in the aforementioned "hunting". The operator has to accommodate the system pressure oscillations when trying to control the movement of the arm. In the arrangement of the invention, as the initial part of the lifting movement may occur when the control unit 40 is operating under the second control scheme, the changes in arm position and speed of movement are more gradual than under the first control scheme with the result that fewer, smaller oscillations will be generated. As a result, control is significantly enhanced. Similarly, problems can be faced where the arm is being used to move relatively light loads, and the invention again serves to reduce such oscillations and hence permits improved control.

It will be appreciated that a range of other parameters could be sensed.

In an alternative embodiment, rather than using the sensed parameter in controlling the raising and lowering of an arm, the magnitude of the sensed parameter may be used to determine whether or not a stability control function is used. In the description hereinbefore where the raising and lowering of an arm is described, it will be appreciated that the motion of the arm is either being aided by or being countered by the effect of gravity. Where, rather than being used to control such movement of such an arm, the control arrangement is being used to control slewing motion, it will be appreciated that no gravitational assistance is present. In such an application, when slewing motion is required to commence, in order to overcome the initial inertia the system pressure needs to rise, requiring an increase in the associated pump output. Once slewing movement has commenced, the inertial effects having been overcome, the system pressure falls. As with the arrangement described hereinbefore, the time lag between the inertial effects being overcome and the pump output falling results in the system pressure oscillating around the desired value, and the operator has to compensate for the oscillating system pressure when controlling the operation of the device.

It is known to provide a controller to control acceleration at the commencement of such slewing movement, the controller serving to hold the pump output pressure at a substantially fixed, artificially high value. Although such systems provide improved control, and reduce hunting problems, and hence are advantageous, they are not energy efficient as the pump output is held at the artificially high level.

In this embodiment of the invention, when slewing motion is to commence, the control unit controls the positions of the spools 16, 18 in accordance with a first control scheme in which the stability control function is switched on. The first control scheme continues to be used until the load has been accelerated from zero to a predetermined proportion of the maximum speed of movement. Once this slewing speed has been reached, the control unit 40 controls the spool positions in accordance with a second control scheme in which the stability control function is switched off, and supply pressure is reduced thereby. As a result it will be appreciated that the benefits of a stability control function in reducing oscillations upon the commencement of slew movement can be achieved, thereby enhancing control, whilst permitting the energy losses associated with the use of such a control function to be reduced by automatically switching off the function, allowing the pressure to drop from the artificially high value, when the benefits associated therewith are no longer applicable.

The invention may also be used to assist in maintaining control when a load moves from a position in which movement thereof is assisted by gravity to a position in which movement is against the action of gravity, or vice versa. It will be appreciated that as the position at which gravitational assistance changes is passed, it would be easy for control to be lost. By switching between control schemes at that point, or as that point is being approached, the load can be moved past that point in a continuous, smooth fashion. It will be appreciated that such a control scheme may be of assistance in controlling the movement of, for example, an arm that is pivoted towards its upper end and which can be swung to both sides of the pivot point.

It will be appreciated that in all of the arrangements described hereinbefore control accuracy is enhanced. The control enhancements are achieved by switching between control schemes which relate operator demanded input signals to the positions occupied by the spools 16, 18, and thus can be incorporated in a simple and convenient manner, not requiring significant changes to be made to the control valves themselves. If desired, more than two control schemes may be provided, thereby permitting even greater improvements in control. Further, it may be possible for the control schemes to be user defined or modifiable to allow the user to determine how a particular joystick movement is interpreted and/or to permit control over the point or points at which switching between the control schemes occurs.

As mentioned hereinbefore, the control valve may have other forms of movable or slidable element than the spools mentioned herein, and the invention is equally applicable to such valves. Further, it may be used with valves having fewer or more movable elements, for example it may be used with arrangements having four individually movable valve elements.

A number of other modifications and alterations may be made to the arrangements described hereinbefore without departing from the scope of the invention.

## Claims

1. A control arrangement for use in a hydraulic control system including a control valve (10) of the type having at least two movable elements, such as spools (16, 18) or poppets, adapted to control the main flow through the valve, and further comprising a control unit (40), the control arrangement adapted to:
control the operation of the control valve in accordance with a first control scheme;
monitor an operating parameter of the control system; and
control the operation of the control valve in accordance with a second control scheme in the event that the value of the operating parameter falls outside of a predetermined range, **characterized in that** the parameter monitored is related to speed of slew motion, the control arrangement being operable to switch between the first control scheme and the second control scheme when the speed of slew motion exceeds a predetermined speed, and that the first control scheme incorporates a stability function to assist control when the speed of slew motion is less than a predetermined speed, the second control scheme not including such functionality being used when the speed of slew motion exceeds a predetermined speed.

2. An arrangement according to Claim 1, wherein the operating parameter which is monitored is representative of the position of a controlled member, the control arrangement being operable to switch between the first control scheme and the second control scheme when the position of the member exceeds a predetermined position.

3. An arrangement according to Claim 1 or claim 2, wherein the first control scheme is arranged to achieve a relatively large change in position for a given movement of a control actuator, the second scheme achieving a smaller change in position for the same movement of the control actuator.

4. An arrangement according to Claim 1, wherein the operating parameter is the speed of movement of a controlled member

5. A hydraulic control system comprising a control arrangement in accordance with one of the claims 1-4.

6. A method of operating a hydraulic control valve (10) of the type having at least two movable elements, such as spools (16, 18) or poppets, adapted to control the main flow through the valve, and further comprising a control unit (40), the method including:
controlling the operation of the control valve in accordance with a first control scheme;
monitoring an operating parameter of the control system; and
controlling the operation of the control valve in accordance with a second control scheme in the event that the value of the operating parameter falls outside of a predetermined range **characterized by** monitoring the operating parameter being related to speed of slew motion, operating the control arrangement to switch between the first control scheme and the second control scheme when the speed of slew motion exceeds a predetermined speed, wherein the first control scheme incorporates a stability function to assist control when the speed of slew motion is less than a predetermined speed, the second control scheme not including such functionality being used when the speed of slew motion exceeds a predetermined speed.

## Patentansprüche

1. Eine Steuerungsanlage zur Verwendung in hydraulischen Steuerungssystemen, einschliesslich eines Regelventils (10) mit mindestens zwei beweglichen Elementen, wie z. B. Spulen (16, 18) oder Ventilkegel, das den Hauptfluss durch das Ventil steuert, und weiterumfassend eine Steuereinheit (40), die Steuerungsanlage ist angepasst zur:
Steuerung des Betriebs des Regelventils in Übereinstimmung mit einem ersten Steuerungsschema;
Überwachung der Betriebsparameter des Steuerungssystems; und
Steuerung des Betriebs des Regelventils in Übereinstimmung mit einem zweiten Steuerungsschema für den Fall, dass der Wert der Betriebsparameter außerhalb des vorgegebenen Toleranzbereiches fällt; **dadurch gekennzeichnet, dass** sich der überwachte Parameter auf die Geschwindigkeit der Schwenkbewegung bezieht, die Steuerungsanlage betreibbar ist, um zwischen dem ersten und dem zweiten Steuerungsschema zuschalten, wenn die Geschwindigkeit der Schwenkbewegung die vorgegebene Geschwindigkeit überschreitet, und dass das erste Steuerungsschema eine Stabilitätsfunktion zur Unterstützung der Steuerung umfasst, wenn die Geschwindigkeit der Schwenkbewegung die vorgegebene Geschwindigkeit unterschreitet, wobei das zweite Steuerungsschema, das nicht über diese Funktion verfügt, eingesetzt wird, wenn die Geschwindigkeit der Schwenkbewegung die vorgegebene Geschwindigkeit überschreitet.

2. Eine Steuerungsanlage gemäß Anspruch 1, wobei der überwachte Betriebsparameter repräsentativ für die Position eines gesteuerten Elements ist, wobei die Steuerungsanlage betreibbar ist, um zwischen dem ersten und dem zweiten Steuerungsschemas zuschalten, wenn die Position des Elements eine vorgegebene Position überschreitet.

3. Eine Anlage gemäß Anspruch 1 und Anspruch 2, wobei das erste Steuerungsschema angeordnet ist, um eine relativ große Positionsänderung für eine vorgegebene Bewegung eines Steuerantriebs zu erreichen, wobei das zweite Steuerungsschema eine kleinere Positionsänderung für die gleiche Bewegung des Steuerantriebs erreicht.

4. Eine Anlage gemäß Anspruch 1, wobei der Betriebsparameter die Geschwindigkeit der Bewegung eines gesteuerten Elements ist.

5. Ein hydraulisches Steuerungssystem umfassend einer Steuerungsanlage gemäss einem der Ansprüche 1-4.

6. Ein Verfahren zum Betrieb eines hydraulischen Regelventils (10) mit mindestens zwei beweglichen Elementen, wie z. B. Spulen (16, 18) oder Ventilkegel, das den Hauptfluss durch das Ventil steuert, und weiter umfassend eine Steuereinheit (40), wobei das Verfahren umfasst:
Steuern des Regelventils in Übereinstimmung mit einem ersten Steuerungsschema;
Überwachen eines Betriebsparameters des Steuerungssystems; Und
Steuern des Betriebs des Regelventils in Übereinstimmung mit einem zweiten Steuerungsschemas für den Fall, dass der Wert der Betriebsparameter außerhalb des vorgegebenen Toleranzbereiches fällt; **gekennzeichnet durch**, dass sich Überwachen des Betriebsparameters in Zusammenhang auf die Geschwindigkeit der Schwenkbewegung, Steuern der Steuerungsanlage umzwischen dem ersten und dem zweiten Steuerungsschema zuschalten, wenn die Geschwindigkeit der Schwenkbewegung die vorgegebene Geschwindigkeit überschreitet, wobei das erste Steuerungsschema eine Stabilitätsfunktion zur Unterstützung der Steuerung umfasst, wenn die Geschwindigkeit der Schwenkbewegung die vorgegebene Geschwindigkeit unterschreitet, wobei - das zweite Steuerungsschema, das nicht über diese Funktion verfügt, eingesetzt wird, wenn die Geschwindigkeit der Schwenkbewegung die vorgegebene Geschwindigkeit überschreitet.

## Revendications

1. Un dispositif de commande pour une utilisation dans un système de commande hydraulique comprenant une soupape de commande (10) de type ayant au moins deux éléments mobiles, tels que des bobines (16, 18) ou des clapets, adaptés pour contrôler le flux principal dans la vanne, et comprenant par ailleurs une unité de commande (40), le dispositif de commande étant adapté pour :
commander le fonctionnement de la soupape de commande conformément à un premier régime de commande ;
surveiller un paramètre de fonctionnement du système de commande ; et
commander le fonctionnement de la soupape de commande conformément à un deuxième régime de commande au cas où la valeur du paramètre de fonctionnement se situe hors d'une plage prédéterminée, **caractérisé en ce que** le paramètre surveillé est lié à la vitesse du mouvement de balayage, le dispositif de commande étant configuré pour basculer entre le premier et le deuxième régime de commande lorsque la vitesse de balayage est supérieure à une vitesse prédéterminée, et que le premier régime de commande comporte une fonction de contrôle de stabilité pour assister la commande lorsque la vitesse de balayage est inférieure à une vitesse prédéterminée, le deuxième régime de commande ne comprenant pas cette fonction étant utilisé lorsque la vitesse de balayage dépasse une vitesse prédéterminée.

2. Un dispositif selon la revendication 1, dans lequel le paramètre de fonctionnement surveillé est représentatif de la position d'un organe commandé, le dispositif de commande pouvant basculer entre le premier et le deuxième régime de commande lorsque la position de l'organe dépasse une position prédéterminée.

3. Un dispositif selon la revendication 1 ou la revendication 2, dans lequel le premier régime de commande est agencé pour obtenir un changement de position relativement grand pour un mouvement donné d'un actionneur de commande, le deuxième régime entraînant un changement de position plus petit pour ce même mouvement.

4. Un dispositif selon la revendication 1, dans lequel le paramètre de fonctionnement est la vitesse de déplacement d'un organe commandé.

5. Un système de commande hydraulique comprenant un dispositif de commande conformément à l'une des revendications 1 à 4.

6. Une méthode d'opération d'une soupape de commande (10) hydraulique de type ayant au moins deux éléments mobiles, tels que des bobines (16, 18) ou des clapets, adaptés pour contrôler le flux principal dans la vanne, et comprenant par ailleurs une unité de commande (40), la méthode incluant :
la commande du fonctionnement de la soupape de commande conformément à un premier régime de commande ;
la surveillance d'un paramètre de fonctionnement du système de commande ; et
la commande du fonctionnement de la soupape de commande conformément à un deuxième régime de commande au cas où la valeur du paramètre de fonctionnement se situe hors d'une plage prédéterminée, **caractérisé par** surveiller le paramètre de fonctionnement étant lié à la vitesse du mouvement de balayage, commander le dispositif de commande à basculer entre le premier et le deuxième régime de commande lorsque la vitesse de balayage est supérieure à une vitesse prédéterminée, le premier régime de commande intégrant une fonction de contrôle de stabilité pour assister la commande lorsque la vitesse de balayage est inférieure à une vitesse prédéterminée, le deuxième régime de commande ne comprenant pas cette fonction étant utilisé lorsque la vitesse de balayage dépasse une vitesse prédéterminée.
